# EUROPEAN PATENT APPLICATION

(11) **EP 4 717 568 A1**
(43) Date of publication of application: **01.04.2026**
(21) Application number: 25202222.3
(22) Date of filing: 15.09.2025
(51) Int. Cl.: B62H 5/18, B62K 5/027, B62K 5/05, B62K 5/08, B62K 5/10, B62L 3/06, B62K 3/00

(54) **ELECTRIC SHORT-DISTANCE MOBILITY VEHICLES AND SCOOTERS**

(30) Priority: 27.09.2024 CN 202422384684 U
(71) Applicant: 3KM Pte. Ltd, Singapore 199591 (SG)
(72) Inventor: LI, Hongtao, 199591 SINGAPORE (SG); WANG, Qibiao, 199591 SINGAPORE (SG); XIAO, Ziqiu, 199591 SINGAPORE (SG)
(74) Representative: Santarelli

(57) **Abstract**

The present application provides an electric short-distance transportation vehicle (001) and a scooter. The electric short-distance transportation vehicle (001) includes a travel body (100) and a parking module (200). The travel body (100) includes a target wheel (110). The parking module (200) includes a triggering unit (210). The triggering unit (210) is disposed on an outer surface of the travel body (100) and configured to, when triggered, instruct the parking module (200) to switch between a first state and a second state. In the first state, the parking module (200) prevents the target wheel (110) from rotating to maintain the electric short-distance transportation vehicle (001) in a powered-on and parking state; and in the second state, the parking module (200) allows the target wheel (110) to rotate. The electric short-distance transportation vehicle (001) and the scooter provided in this specification can solve the problem that an existing short-distance transportation vehicle (001) is inconvenient for parking temporarily.

## Description

### Technical Field

The present application relates to the technical field of short-distance transportation vehicles, and in particular, to electric short-distance mobility vehicles and scooters.

### Background of the Invention

With the development of technology, various types of transportation vehicles have emerged in people's lives, bringing great convenience to daily living. In particular, short-distance transportation vehicles have been increasingly used, such as scooters and self-balanced vehicles. These short-distance transportation vehicles can be ridden by people standing thereon, are small and portable, and suitable for traveling through narrow spaces, thereby having advantages in ultra-short distance traveling. The short-distance transportation vehicles in the existing technology are not convenient for temporary parking, especially in scenarios where there is a risk of vehicle sliding. Usually, when a user wants to temporarily park a vehicle, the user needs to continuously press a brake lever blade without releasing so as to prevent vehicle sliding. Alternatively, the user needs to push a short-distance transportation vehicle by hands to overcome the action of gravity that causes the short-distance transportation vehicle to slide, thereby preventing vehicle sliding.

Therefore, there is a need to provide a short-distance transportation vehicle that allows a rider to temporarily park the eclectic short-distance transportation vehicle with a convenient operation.

The content in the background section is merely information known to the inventors, and neither represents that the above information has been found in the public field prior to the filing date of the present application nor represents that it can become the prior art of the present application.

### Summary of the Invention

The present application provides an electric short-distance transportation vehicle and a scooter that can solve the problems mentioned above.

In a first aspect, the present application provides an electric short-distance transportation vehicle, including a travel body and a parking module. The travel body includes a target wheel. The parking module includes a triggering unit. The triggering unit is disposed on an outer surface of the travel body and configured to, when triggered, instruct the parking module to switch between a first state and a second state. In the first state, the parking module is configured to prevent the target wheel from rotating to maintain the electric short-distance transportation vehicle in a powered-on and parking state. In the second state, the parking module is configured to allow the target wheel to rotate.

In some embodiments, the travel body further includes a driving motor, a front wheel, and a rear wheel. **The** target wheel is at least one of the front wheel or the rear wheel. **The** driving motor is mechanically connected with the target wheel; and the parking module further includes a controller. **The** controller is electrically connected with the triggering unit and the driving motor. **The** controller is configured to: when the triggering unit is triggered for a first time, send a first signal to control the driving motor to limit a forward rotation and a backward rotation of the target wheel such that the electric short-distance transportation vehicle is maintained in the parking state. **The** controller is further configured to: when the triggering unit is triggered for a second time, send a second signal to release the limitation of the driving motor on the forward rotation and the backward rotation of the target wheel such that the parking state of the electric short-distance transportation vehicle is released.

In some embodiments, an output shaft of the driving motor is in transmission connection with the target wheel; the driving motor is configured to generate an electromotive force for driving the forward rotation of the target wheel to limit the backward rotation of the target wheel; the driving motor is configured to generate an electromotive force for driving the backward rotation of the target wheel to limit the forward rotation of the target wheel; and the first signal is configured to control the driving motor to keep the target wheel from rotating by generating an electromotive force within a preset duration such that the electric short-distance transportation vehicle is maintained in the parking state within the preset duration.

In some embodiments, the travel body further includes a brake system, a front wheel, and a rear wheel. The target wheel is at least one of the front wheel or the rear wheel. The parking module further includes a controller that is electrically connected with the triggering unit and the brake system. The controller is configured to: when the triggering unit is triggered for a first time, send a first signal to control the brake system to lock the target wheel with a frictional force for a preset duration to prevent the target wheel from rotating such that the electric short-distance transportation vehicle is maintained in the parking state. The controller is further configured to: when the triggering unit is triggered for a second time, send a second signal to release the locking of the target wheel by the brake system such that the parking state of the electric short-distance transportation vehicle is released.

In some embodiments, the travel body further includes an electric lock. The controller is electrically connected with the triggering unit and the electric lock. The controller is configured to: when the triggering unit is triggered for the first time, send the first signal to control the electric lock to lock a rotation of the target wheel such that the short-distance transportation vehicle is maintained in the parking state. The controller is further configured to: when the triggering unit is triggered for the second time, send the second signal to control the electric lock to unlock the rotation of the target wheel to release the parking state.

In some embodiments, the travel body includes a body, a steering column, and a handle bar; the handle bar is fixedly connected with the steering column; the body is rotatably connected with the steering column; an end of the handle bar includes a handle grip; and the triggering unit is disposed between the handle grip and the steering column.

In some embodiments, the triggering unit is a button unit and includes a base, a triggering element, and a switch contact. The switch contact is disposed on the base; the triggering element is rotatably connected with the base; and the triggering element is pressed to rotate relative to the base, thereby triggering the switch contact.

In some embodiments, the travel body includes: a brake lever blade and a lever body. The lever body is rotatably connected with the brake lever blade. The lever body is fixedly connected with the handle bar, the brake lever blade is located on a first side of the lever body away from a rider, and the triggering unit is located on a second side of the lever body close to the rider, and the base is fixedly connected with the lever body.

In some embodiments, an accommodating slot opening outwards is disposed on the second side of the lever body; and the triggering unit is disposed within the accommodating slot and fixedly connected with the lever body.

In some embodiments, the triggering unit is connected with the controller by a brake cable; the handle bar is provided with a wiring groove; and the wiring groove is communicated with the accommodating slot such that the brake cable extends from the accommodating slot into the wiring groove.

In some embodiments, the triggering unit is ring-shaped and includes an inner ring and an outer ring; the inner ring is sleeved over the handle bar and located between the handle grip and the steering column; and the outer ring is rotatably sleeved over the inner ring.

In some embodiments, the triggering unit further includes a locking structure, and when a torsional force in a first direction is exerted on the outer ring such that the outer ring rotates around the inner ring to a preset position, the triggering unit is triggered.

In a second aspect, the present application provides a scooter. The scooter includes the travel body and the parking module that are described above.

In conclusion, the electric short-distance transportation vehicle and the scooter provided by this specification enable a user to exert an acting force to a triggering unit such that the triggering unit is triggered to control a parking module to switch between a first state and a second state. With the parking module disposed in this way, on the one hand, it is convenient for a user to manipulate the eclectic short-distance transportation vehicle to rapidly enter the parking state while keeping it powered on; the stability of the eclectic short-distance transportation vehicle in temporary parking can be improved, and the risks of the eclectic short-distance transportation vehicle sliding on a slope can be reduced. On the other hand, it is also convenient for the user to manipulate the eclectic short-distance transportation vehicle to rapidly terminate the parking state when recovering riding. The user can control the parking module to enter opposite states by triggering the triggering unit at different times. Thus, the operation actions of the user can be reduced such that the process of manipulating the eclectic short-distance transportation vehicle by the user is more convenient and swifter.

Other functions of the electric short-distance transportation vehicle provided in the present application will be enumerated in part in the following description. According to the description, the contents presented by reference numerals and examples will be apparent for those of ordinary skill in the art. Creative aspects of the electric short-distance transportation vehicle and the scooter provided in the present application may be fully explained by practice or by using the methods, devices, and combinations described in the following detailed examples.

### Brief Description of the Drawings

To describe the technical solutions in the embodiments of the present application more clearly, the accompanying drawings required for describing the embodiments are briefly described below. Apparently, the accompanying drawings in the following description show merely some embodiments of the present application, and a person of ordinary skill in the art may derive other drawings from these accompanying drawings without creative efforts.
FIG. 1 is a three-dimensional structural schematic diagram of an electric short-distance transportation vehicle provided according to some embodiments of the present application;
FIG. 2 is a partial structural schematic diagram of an electric short-distance transportation vehicle provided according to some embodiments of the present application in a top view;
FIG. 3 is a schematic block diagram of a circuit structure of an electric short-distance transportation vehicle provided according to some embodiments of the present application;
FIG. 4 is a partial structural schematic diagram of an electric short-distance transportation vehicle provided according to some embodiments of the present application;
FIG. 5 is an exploded structural schematic diagram corresponding to the structure of FIG. 4; and
FIG. 6 is an exploded structural schematic diagram of a triggering unit of an electric short-distance transportation vehicle provided according to some embodiments of the present application.

### Detailed Description of Embodiments

The following description provides specific application scenarios and requirements of the present description, with the purpose of enabling those skilled in the art to make and use the content in the present application. For those skilled in the art, various partial modifications to the disclosed embodiments are obvious, and without departing from the spirit and scope of the present description, the general principles defined herein can be applied to other embodiments and application. Therefore, the specification is not limited to the embodiments, but is the consistent with the widest scope of claims.

The terms used herein are merely intended to describe specific examples or embodiments, rather than to limit the present application. For example, unless expressly stated otherwise, the singular forms "a", "an" and "this" used herein may also include plural forms. In the present application, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In consideration of the following description, in the present application, these and other features, the operations and functions of related elements of the structure, as well as the economy of the combination and manufacturing of components can be significantly improved. With reference to the drawings, all of these form part of the present application. However, it should be clearly understood that the drawings are merely intended for illustration and description purposes, rather than to limit the scope of the present application. It should be understood that the accompanying drawings are not drawn to scale.

The flowchart used in the present application illustrates the operations implemented by the system according to some embodiments in the present application. It should be clearly understood that the operations of the flowchart may be implemented out of sequence. Instead, operations may be implemented in reverse sequence or simultaneously. In addition, one or more other operations may be added to the flowchart. One or more operations may be removed from the flowchart.

In the present application, "X includes at least one of A, B, or C" means X includes at least A, X includes at least B, or X includes at least C. In other words, X may include only one of A, B, and C, or include any combination of A, B, and C and other possible content/element. The any combination of A, B, and C may be A, B, C, AB, AC, BC, or ABC.

In the present application, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. For another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

In the present application, different from common vehicles, the short-distance transportation vehicle herein refers to various devices and tools meeting individuals' transportation demands within a relatively short distance range. Such devices typically have portability, maneuverability, and environmental friendliness, are suitable for short distance traveling in cities or specific areas, and can effectively replace or supplement traditional vehicles, thereby reducing traffic congestion and the environmental pollution. The above-mentioned short-distance transportation vehicle is described by taking an electric short-distance transportation vehicle and a scooter as examples in this specification.

The short-distance transportation vehicles in the existing technology are not convenient for temporary parking, especially in some scenarios in which vehicles are prone to sliding. Usually, when a user wants to temporarily park a vehicle, the user needs to continuously press a brake lever blade without releasing so as to prevent vehicle sliding. Alternatively, the user needs to hold a short-distance transportation vehicle by hands to prevent sliding.

The electric short-distance transportation vehicle provided in this specification has a parking function. In the parking state, the vehicle will brake regardless of whether it is in motion, and it will remain powered on and continuously braked after coming to a stop, allowing it to stay in place until the parking state is released. To this end, the electric short-distance transportation vehicle provided in this specification includes a triggering unit for parking. A user can exert an acting force to the triggering unit such that the triggering unit is triggered to control a parking module to switch between a first state and a second state. With the parking module disposed in this way, on the one hand, it is convenient for a user to manipulate the eclectic short-distance transportation vehicle to rapidly enter the parking state while keeping it powered on; the stability of the eclectic short-distance transportation vehicle in temporary parking can be improved, and the risks of the eclectic short-distance transportation vehicle sliding on a slope can be reduced. On the other hand, it is also convenient for the user to manipulate the eclectic short-distance transportation vehicle to rapidly terminate the parking state when recovering riding. The user can control the parking module to enter opposite states by triggering the triggering unit at different times. Thus, the operation actions of the user can be reduced such that the process of manipulating the eclectic short-distance transportation vehicle by the user is more convenient and swifter.

According to some embodiments of the present application, the electric short-distance transportation vehicle may be an electric scooter, a self-balanced vehicle, or another similar light vehicle. However, it will be understood by those skilled in the art that other types of short-distance transportation vehicles are also applicable to the invention of the present application without departing from the spirit thereof.

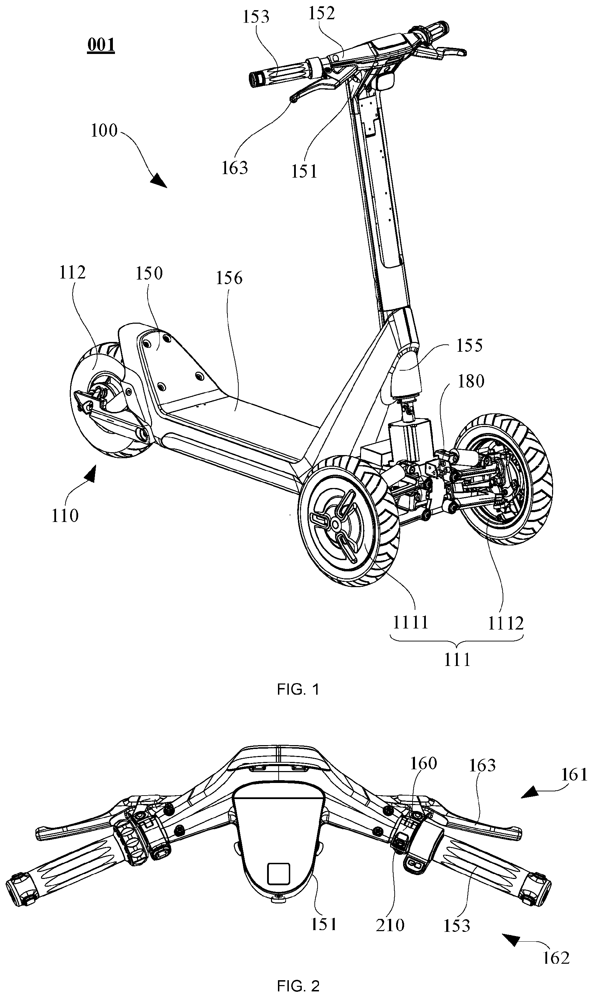

FIG. 1 is a three-dimensional structural schematic diagram of an eclectic short-distance transportation vehicle provided according to some embodiments of the present application. As shown in FIG. 1, the eclectic short-distance transportation vehicle 001 may include a travel body 100. The travel body 100 is a main body structure of the eclectic short-distance transportation vehicle 001 for performing the functions of traveling and carrying a person of the eclectic short-distance transportation vehicle 001. The travel body 100 may include a body 150, at least one wheel, and a suspension system 180.

The body 150 may be a base 211 and a main body structure of the travel body 100. The body 150 may connect various components of the eclectic short-distance transportation vehicle 001, such as wheels and the suspension system 180. The body 150 may be further configured to carry a user. The body 150 may have a plurality of different structures to adapt to different application scenes. For example, the eclectic short-distance transportation vehicle 001 is a self-balanced vehicle, a tricycle, or a scooter, where the bodies 150 of the self-balanced vehicle, the tricycle, and the scooter may have different structures. FIG. 1 in the present application is described by taking a three-wheeled scooter as an example. Those skilled in the art will understand that other structures of the body 150 also fall into the protection scope of the present application. The body 150 may be made of a metal material, such as a carbon steel material, an aluminum alloy material, and a titanium alloy material. The body 150 may also be made of a carbon fiber material. The body 150 may also be made of a combination of a plurality of different materials, which is not limited herein.

The body 150 may also include a carrying part 156 for carrying the user. The carrying part 156 in the body 150 as shown in FIG. 1 may be configured to carry the feet of the user. The user can drive the eclectic short-distance transportation vehicle 001 by standing on the body 150. In some embodiments, the body 150 may also include a seat so that the user can drive the eclectic short-distance transportation vehicle 001 by sitting on the seat. In some embodiments, the body 150 may also include a storage part for storing articles. In some embodiments, the body 150 may also include other components, which is not limited herein.

The at least one wheel may be a travel part of the eclectic short-distance transportation vehicle 001 to realize traveling of the eclectic short-distance transportation vehicle 001. Each of the at least one wheel may be connected with the body 150 to drive the body 150 to travel. The wheel may be an inflatable tyre, or may be a solid rubber tyre, which is not limited herein.

In some embodiments, as shown in FIG. 1, the at least one wheel may include a first wheel 1111 and a second wheel 1112, such as a self-balanced vehicle. The first wheel 1111 and the second wheel 1112 may be located on two sides of the body 150, respectively, so that the body 150 can stand without a kick stand. Further, the first wheel 1111 and the second wheel 1112 may be symmetrically distributed on the two sides of the body 150.

In some embodiments, the eclectic short-distance transportation vehicle 001 may further include other wheels which are distributed with the first wheel 1111 and the second wheel 1112 along a longitudinal direction of the body 150. The longitudinal direction may be a traveling direction of the body 150.

In some embodiments, as shown in FIG. 1, the travel body 100 includes a front wheel 111 and a rear wheel 112. That is, the at least one wheel may include the front wheel 111 and the rear wheel 112. The front wheel 111 and the rear wheel 112 may be distributed along the longitudinal direction of the body 150. The longitudinal direction may be the traveling direction of the body 150. At least one of the front wheel 111 and the rear wheel 112 may be driven to rotate relative to the body 150, thereby driving the scooter to travel. The front wheel 111 and the rear wheel 112 may be separately connected with the body 150 to drive the body 150 to travel. In some embodiments, the first wheel 1111 and the second wheel 1112 may be the front wheels 111 of the eclectic short-distance transportation vehicle 001. In this case, there may be one rear wheel 112, or two rear wheels 112 that are symmetrically distributed on the two sides of the body 150. In some other embodiments, the first wheel 1111 and the second wheel 1112 may be the rear wheels 112 of the eclectic short-distance transportation vehicle 001. In this case, there may be one front wheel 111, or two front wheels 111 that are symmetrically distributed on the two sides of the body 150. In the eclectic short-distance transportation vehicle 001 as shown in FIG. 1, the description is made by taking as an example that the first wheel 1111 and the second wheel 1112 are the front wheels 111 of the eclectic short-distance transportation vehicle 001. Those skilled in the art will understand that the first wheel 1111 and the second wheel 1112 being the rear wheels 112 of the eclectic short-distance transportation vehicle 001 also falls within the protection scope of this specification.

As shown in FIG. 1, the travel body 100 includes a target wheel 110. The target wheel 110 is at least one of the front wheel 111 or the rear wheel 112. That is, at least one of the at least one wheel is the target wheel 110.

FIG. 2 is a partial structural schematic diagram of an electric short-distance transportation vehicle provided according to some embodiments of the present application in a top view. In some embodiments as shown in FIG. 1 and FIG. 2, the travel body 100 includes a steering column 151 and a handle bar 152. The handle bar 152 is fixedly connected with the steering column 151. The body 150 is rotatably connected with the steering column 151. The front wheel 111 is rotatably connected with the steering column 151 and then is rotatably connected with the body 150 via the steering column 151. Further, the body 150 is pivotably connected with the steering column 151.

An end of the handle bar 152 includes a handle grip 153. In some embodiments, each of two ends of the handle bar 152 may include one handle grip 153. The handle grip 153 may be configured for a user to hold. When steering of the eclectic short-distance transportation vehicle 001 is needed, the user can use the handle grip 153 to drive the handle bar 152 to rotate/turn relative to the body 150, thus driving the steering column 151 and the front wheel 111 to rotate relative to the body 150, so that the user can realize the steering of the eclectic short-distance transportation vehicle 001.

In some embodiments, as shown in FIG. 1 and FIG. 2, the travel body 100 includes a head tube 155. The head tube 155 is fixedly disposed on the body 150. The steering column 151 is rotatably connected with the head tube 155 such that the steering column 151 is rotatably connected with the body 150. The front wheel 111 is rotatably connected with the body 150 via the steering column 151 and the head tube 155.

In some other embodiments, the travel body 100 includes a steering wheel. The handle bar 152 can be replaced with the steering wheel.

As shown in FIG. 1, the suspension system 180 can connect at least one wheel and the body 150 of the eclectic short-distance transportation vehicle 001. That is to say, the at least one wheel can be connected with the body 150 via the suspension system 180. The suspension system 180 may also be a generic term for all force transfer connection means between the body 150 and the wheel. The role of the suspension system is to transfer a force and a torque between the body 150 and the wheel. The suspension system 180 may also buffer an impact caused by an uneven road to the body 150 and reduce the resulting vibration to ensure that the eclectic short-distance transportation vehicle 001 can travel smoothly.

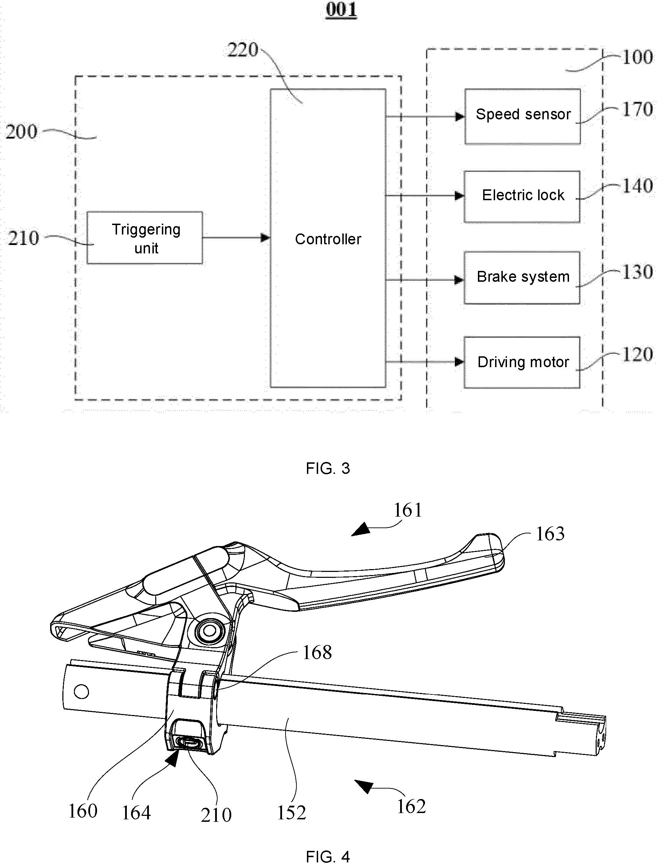

FIG. 3 is a schematic block diagram of a circuit structure of an electric short-distance transportation vehicle provided according to some embodiments of the present application. As shown in FIG. 1 to FIG. 3, the eclectic short-distance transportation vehicle 001 further includes a parking module 200. The parking module 200 includes a triggering unit 210. The triggering unit 210 is disposed on an outer surface of the travel body 100 and configured to, when triggered, instruct the parking module 200 to switch between a first state and a second state. In the first state, the parking module 200 is configured to prevent the target wheel 110 from rotating to maintain the electric short-distance transportation vehicle 001 in a powered-on and parking state; and in the second state, the parking module 200 is configured to allow the target wheel 110 to rotate.

The triggering unit 210 is disposed on the outer surface of the travel body 100, which is convenient for the user to exert an acting force on the triggering unit 210. The user can exert the acting force to the triggering unit 210 such that the triggering unit 210 is triggered to control the parking module 200 to switch between the first state and the second state. When the user stops riding and needs to park the electric short-distance transportation vehicle 001, the parking module 200 can be controlled by the triggering unit 210 to switch from the second state to the first state. When the user needs to terminate the parking of the electric short-distance transportation vehicle 001, the parking module 200 can be controlled by the triggering unit 210 to switch from the first state to the second state.

With the parking module 200 in this way, on the one hand, it is convenient for the user to manipulate the eclectic short-distance transportation vehicle 001 to rapidly enter the parking state while keeping it powered on; the stability of the eclectic short-distance transportation vehicle 001 in temporary parking can be improved, and the risks of the eclectic short-distance transportation vehicle 001 sliding down a slope can be reduced. On the other hand, it also allows the user to easily control the vehicle to quickly exit the parking state when resuming riding. The user can control the parking module 200 to enter opposite states by triggering the triggering unit 210 at different times. Thus, the operation actions of the user can be reduced such that the process of manipulating the eclectic short-distance transportation vehicle 001 by the user is more convenient and swifter.

In some embodiments, the target wheel 110 may be a driven wheel. When the rotation of the target wheel 110 is limited, a frictional force of the target wheel 110 with the ground increases such that the eclectic short-distance transportation vehicle 001 enters the parking state.

In some embodiments, the target wheel 110 may also be a driving wheel. When the rotation of the target wheel 110 is limited, the supply of a traveling power for the body 150 can be interrupted; meanwhile, the frictional force of the target wheel 110 with the ground increases such that the eclectic short-distance transportation vehicle 001 enters the parking state.

In some embodiments, as shown in FIG. 1 to FIG. 3, the travel body 100 includes a driving motor 120. The driving motor 120 is mechanically connected with the target wheel 110. The parking module 200 further includes a controller 220. The controller 220 is electrically connected with the triggering unit 210 and the driving motor 120. The controller 220 is configured, when the triggering unit is triggered 210 for a first time, send a first signal to control the driving motor 120 to limit/restrict a forward rotation and a backward rotation of the target wheel 110 such that the electric short-distance transportation vehicle 001 is maintained in the parking state. Moreover, the controller 220 is further configured to, when the triggering unit 210 is triggered for a second time, send a second signal to release the limitation/restriction of the driving motor 120 on the forward rotation and the backward rotation of the target wheel 110 such that the parking state of the electric short-distance transportation vehicle 001 is released. In some embodiments, the triggering for the second time may occur immediately following the triggering for the first time.

The target wheel 110 may be a driving wheel. In this case, if the controller 220 receives a signal sent by the triggering unit 210, the controller 220 sends a corresponding instruction to control the driving motor 120, thereby adjusting a rotation state of the driving wheel.

For example, in the process of the electric short-distance transportation vehicle 001 traveling forwards, the driving motor 120 can drive the forward rotation of the target wheel 110, thereby driving the electric short-distance transportation vehicle 001 to travel. In this case, after receiving a signal sent by the triggering unit 210, the controller 220 sends a corresponding instruction to control the driving motor 120. When the triggering unit 210 is triggered for the first time, the controller 220 controls the driving motor 120 to stop driving the forward rotation of the target wheel 110, thus controlling the driving motor 120 to limit/restrict the forward rotation and the backward rotation of the target wheel 110. For example, when the electric short-distance transportation vehicle 001 still travels forwards and does not stop completely, the driving motor 120 exerts a resistance on the target wheel 110 to reduce a traveling speed of the electric short-distance transportation vehicle 001 until it stops. After the electric short-distance transportation vehicle 001 fully stops, the electric short-distance transportation vehicle 001 is not powered off, and the controller 220 continuously controls the driving motor 120 to limit/restrict the forward rotation and the backward rotation of the target wheel 110. That is, if the target wheel 110 rotates forwards (e.g., the electric short-distance transportation vehicle 001 stops on a downslope and slides forwards), the driving motor 120 exerts a torque of backward rotation on the wheel such that the electric short-distance transportation vehicle 001 stops in place to park. If the target wheel 110 rotates backwards (e.g., the electric short-distance transportation vehicle 001 stops on an upslope and slides backwards), the driving motor 120 exerts a torque of forward rotation on the wheel such that the electric short-distance transportation vehicle 001 stops in place to park.

If the electric short-distance transportation vehicle 001 is in a parking state when the triggering unit 210 is triggered for the first time, the controller 220 can control the driving motor 120 to limit/restrict the forward rotation and the backward rotation of the target wheel 110. Specific operations are as described previously and will not be described herein redundantly.

Further, after the triggering unit 210 is triggered for the second time, the number of triggering times is reset to zero. That is, next triggering after the triggering unit 210 is triggered for the second time is regarded as the triggering unit 210 being triggered for the first time. Moreover, after the triggering unit 210 is triggered for the second time, the controller 220 cancels the control on the driving motor 120; the driving motor 120 does not limit the rotation of the target wheel; and the parking state ends.

In some embodiments, an output shaft of the driving motor 120 is in transmission connection with the target wheel 110. The driving motor 120 is configured to generate an electromotive force for driving the forward rotation of the target wheel 110 to limit the backward rotation of the target wheel 110. The driving motor 120 is further configured to generate an electromotive force for driving the backward rotation of the target wheel 110 to limit the forward rotation of the target wheel 110. The first signal is configured to control the driving motor 120 to keep the target wheel 110 from rotating by generating an electromotive force within a preset duration such that the electric short-distance transportation vehicle 001 is maintained in the parking state within the preset duration.

That is to say, the driving motor 120 can generate two opposite electromotive forces and thus can limit the forward rotation and the backward rotation of the target wheel 110. Since the target wheel 110 does not rotate, the electromotive force generated by the drive motor 120 does no work, causing the drive motor 120 to emit a large amount of heat, which reduces its service life. Therefore, setting a preset duration can control the amount of time the driving motor 120 keeps the target wheel 110 from rotating, which helps extend the service life of the driving motor 120.

In some embodiments, as shown in FIG. 3, the travel body 100 includes a speed sensor 170 electrically connected with the controller 220. The speed sensor 170 can detect a traveling speed of the electric short-distance transportation vehicle 001 and send a detection signal to the controller 220. The controller 220 can control the driving motor 120 to limit the forward rotation and the backward rotation of the target wheel 110 when determining that the electric short-distance transportation vehicle 001 slides or has a trend of sliding.

Further, the controller 220 can determine a sliding direction of the electric short-distance transportation vehicle 001 based on a detection signal of the speed sensor 170. When the controller 220 detects that the electric short-distance transportation vehicle 001 slides forwards, the electromotive force of the driving motor 120 can be controlled to limit/restrict the forward rotation of the target wheel 110. When the controller 220 detects that the electric short-distance transportation vehicle 001 slides backwards, the electromotive force of the driving motor 120 can be controlled to limit/restrict the backward rotation of the target wheel 110.

The target wheel 110 may also be a driven wheel. In this case, if the controller 220 receives a signal sent by the triggering unit 210, the controller 220 may send a corresponding instruction to control the driving motor 120 and the brake system of the electric short-distance transportation vehicle 001, thereby limiting/restricting the rotation of a driving wheel. This can cause the electric short-distance transportation vehicle 001 to stop traveling such that the rotation of the driven wheel is limited/restricted.

Therefore, in some embodiments, as shown in FIG. 3, the travel body 100 further includes a brake system 130. The parking module 200 further includes a controller 220. The controller 220 is electrically connected with the triggering unit 210 and the brake system 130. The controller 220 is configured to, when the triggering unit 210 is triggered for a first time, send a first signal to control the brake system 130 to lock the target wheel 110 with a frictional force for a preset duration to prevent the target wheel 110 from rotating such that the electric short-distance transportation vehicle 001 is maintained in the parking state. Moreover, the controller 220 is further configured to, when the triggering unit 210 is triggered for a second time; send a second signal to release the locking of the target wheel 110 by the brake system 130 such that the parking state of the electric short-distance transportation vehicle 001 is released. In some embodiments, the triggering for the second time may occur immediately following the triggering for the first time.

For example, the brake system 130 may be a disc brake system or a drum brake system. If the triggering unit 210 is triggered for the first time in the traveling process of the electric short-distance transportation vehicle 001, the controller 220 receives the signal sent by the triggering unit 210 and sends a corresponding instruction to control the driving motor 120 to stop driving the forward rotation of the wheel while controlling the brake system to be driven to brake the target wheel 110 until the electric short-distance transportation vehicle stops. After the electric short-distance transportation vehicle 001 fully stops, the controller 220 still maintains that the brake system of the electric short-distance transportation vehicle brakes the electric short-distance transportation vehicle such that the electric short-distance transportation vehicle 001 can be parked on flat ground, an upslope road section, and a downslope road section.

Further, after the triggering unit 210 is triggered for the second time, the number of triggering times is reset to zero. That is, next triggering after the triggering unit 210 is triggered for the second time is regarded as the triggering unit 210 being triggered for the first time. At this point, the controller 220 cancels the control on the brake system 130, and the brake system 130 does not brake the target wheel 110, and the parking state ends.

In some embodiments, as shown in FIG. 3, the travel body 100 further includes an electric lock 140. The controller 220 is electrically connected with the triggering unit 210 and the electric lock 140. The controller 220 is configured to, when the triggering unit is triggered 210 for a first time, send a first signal to control the electric lock 140 to lock the rotation of the target wheel 110 such that the electric short-distance transportation vehicle 001 is maintained in the parking state. The controller 220 is further configured to, when the triggering unit is triggered 210 for a second time, send a second signal to control the electric lock 140 to unlock the rotation of the target wheel 110 such that the parking state is released.

Under the control of the controller 220, the electric lock 140 can cooperate with the driving motor 120 or the brake system 130 to realize the parking of the electric short-distance transportation vehicle 001. In the locked state, the electric lock 140 can restrict the rotation of the target wheel 110 through a mechanical limit structure. When the electric lock 140 enters or exits the locked state, its mechanical structure changes. Therefore, when the electric lock 140 remains in the locked state, the structure is stable and power consumption is low or even negligible.

Before the driving motor 120 or the brake system 130 unlocks the target wheel 110, the electric lock 140 can enter the locked state, thereby locking the rotation of the target wheel 110. After the driving motor 120 or the brake system 130 unlocks the target wheel 110, the electric lock 140 can still lock the rotation of the target wheel 110. In this way, the electric lock 140 can replace the driving motor 120 or the brake system 130 to limit the rotation of the target wheel 110 so that the power consumption of the electric short-distance transportation vehicle 001 and the heat generation of the driving motor 120 can be reduced.

In some embodiments, as shown in FIG. 2, the triggering unit 210 is disposed between the handle grip 153 and the steering column 151. The triggering unit 210 is positioned in this way such that the user can manually triggers the triggering unit 210. In particular, one of the thumb and the index finger of the user can trigger the triggering unit 210 by pressing when the other three fingers of the user's hand hold/operate the handle grip 153.

In some other embodiments, the triggering unit 210 can be disposed between a steering wheel and the steering column 151, or the triggering unit 210 can be disposed on the steering wheel.

In some embodiments, the triggering unit 210 is disposed on the body 150. For example, the triggering unit 210 can be disposed on the carrying part 156 or around the carrying part 156. The triggering unit 210 is positioned in this way such that the user triggers the triggering unit 210 with a foot.

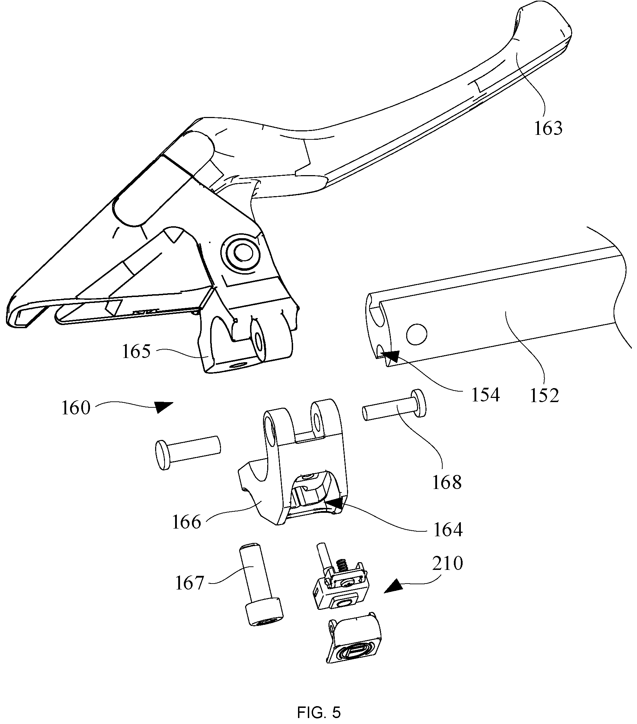

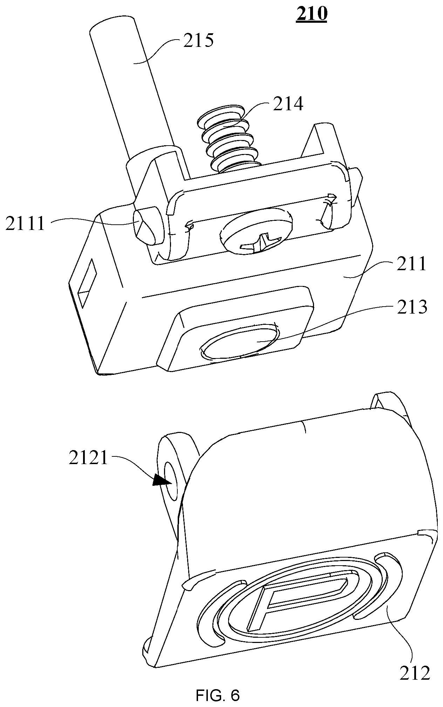

FIG. 4 is a partial structural schematic diagram of an electric short-distance transportation vehicle provided according to some embodiments of the present application. FIG. 5 is an exploded structural schematic diagram corresponding to the structure of FIG. 4. FIG. 6 is an exploded structural schematic diagram of a triggering unit of an electric short-distance transportation vehicle provided according to some embodiments of the present application. In some embodiments, as shown in FIG. 3 to FIG. 6, the triggering unit 210 is connected with the controller 220 via a brake cable 215. The brake cable 215 may be specifically a wire. Further, the triggering unit 210 is a button unit and includes a base 211, a triggering element 212, and a switch contact 213. The switch contact 213 is disposed on the base 211 and connected with the controller 220 via the brake cable 215. The triggering element 212 is rotatably connected with the base 211. The triggering element 212 is pressed to rotate relative to the base 211, thereby triggering the switch contact 213.

In some embodiments, the switch contact 213 is disposed on a side of the base 211 facing the triggering element 212. When pressed, the triggering element 212 rotates toward the base 211, thereby triggering the switch contact 213.

In some embodiments, as shown in FIG. 6, two rotating shafts 2111 sharing a central axis are disposed on the base 211. The triggering element 212 is provided with two rotating holes 2121. The two rotating shafts 2111 correspondingly pass through the two rotating holes 2121 respectively such that the triggering element 212 is rotatably connected with the base 211.

Further, an extension direction of an axis of rotation of the triggering element 212 relative to the base 211 is parallel to that of the handle grip 153.

In some embodiments, the triggering element 212 is flake-like such that the triggering element 212 has a large outer surface area, which is convenient for the user to press the triggering element 212. In some other embodiments, the triggering element 212 may be rod-like, and the triggering element 212 is toggled to move relative to the base 211, thereby triggering the switch contact 213.

In some embodiments, the triggering element 212 is slidably connected with the base 211. The triggering element 212 is pushed to slide relative to the base 211, thereby triggering the switch contact 213.

In some embodiments, the triggering unit 210 is a pressure sensor.

In some embodiments, as shown in FIG. 3 to FIG. 6, the travel body 100 includes a brake lever blade 163 and a lever body 160. The lever body 160 is rotatably connected with the brake lever blade 163. The lever body 160 is fixedly connected with the handle bar 152. The brake lever blade 163 is located on a first side 161 of the lever body 160 away from the rider. The triggering unit 210 is located on a second side 162 of the lever body 160 close to the rider, and the base 211 is fixedly connected with the lever body 160. For example, the base 211 is fixedly connected with the lever body 160 via a first fixing screw 214.

The lever body 160 is connected with a mechanical brake system via a brake cable or a brake oil hose so that the user can manually press the brake lever blade 163 to drive the mechanical brake system to work, thereby controlling the traveling electric short-distance transportation vehicle 001 to stop. The triggering unit 210 is mounted in this way such that the triggering unit 210 and the lever body 160 are arranged densely to take full utilization of the space around the handle bar 152 on the one hand; and on the other hand, the user can manually trigger the triggering unit 210.

In some embodiments, as shown in FIG. 4 to FIG. 6, an accommodating slot 164 opening outwards is disposed on the second side 162 of the lever body 160; and the triggering unit 210 is disposed within the accommodating slot 164 and fixedly connected with the lever body 160.

In this way, on the one hand, the lever body 160 can protect the triggering unit 210, and a beautify layout of the lever body 160 and the triggering unit 210 is provided; and on the other hand, the risks of the user touching the triggering unit 210 by mistake can be reduced.

In some embodiments, as shown in FIG. 4 to FIG. 6, the handle bar 152 is provided with a wiring groove 154; and the wiring groove 154 is communicated with the accommodating slot 164 such that the brake cable 215 extends from the accommodating slot 164 into the wiring groove 154. Further, the brake cable 215 can be connected with the controller 220 after extending out of the wiring groove 154.

The brake cable 215 is arranged in this way such that the handle bar 152 can constrain the brake cable 215 to avoid the brake cable 215 from being exposed. On the one hand, it can protect the brake cable 215, and on the other, it enhances the aesthetic appearance of the vehicle 001.

In some embodiments, the lever body 160 includes a first lever body part 165 and a second lever body part 166. The first lever body part 165 is rotatably connected with the brake lever blade 163, and the triggering unit 210 is located on the second lever body part 166. The first lever body part 165 and the second lever body part 166 are connected via a second fixing screw 167 and a third fixing screw 168 and clamp the handle bar 152. With the second fixing screw 167, a clamping force of the first lever body part 165 and the second lever body part 166 on the handle bar 152 can be adjusted so that the first lever body part 165 and the second lever body part 166 can be mounted on or detached from the handle bar 152.

In some embodiments, the triggering unit 210 is ring-shaped and includes an inner ring and an outer ring; the inner ring is sleeved over the handle bar 152 and located between the handle grip 153 and the steering column 151; and the outer ring is rotatably sleeved over the inner ring. Further, the triggering unit 210 further includes a locking structure; and when a torsional force in a first direction is exerted on outer ring such that the outer ring rotates around the inner ring to a preset position, the triggering unit 210 is triggered.

In particular, the triggering unit can be configured as either a trigger lever structure or a rotating ring structure. The triggering unit 210 is positioned next to the handle grip 153, making it easy for the user to grasp the triggering unit 210 with their thumb and index finger and rotate the outer ring. The user can trigger the triggering unit 210 by rotating the outer ring. When the torsional force in the first direction is exerted on the outer ring such that the outer ring rotates around the inner ring to the preset position for the first time, the triggering unit 210 is triggered for the first time. When the torsional force in the first direction is exerted on the outer ring such that the outer ring rotates around the inner ring to the preset position for the second time, the triggering unit 210 is triggered for the second time. In some other embodiments, when a torsional force opposite to the first direction is exerted on the outer ring such that the outer ring rotates around the inner ring to the preset position for the second time, the triggering unit 210 is triggered for the second time.

In some embodiments, the outer ring is pivotably connected with the inner ring.

The scooter provided in the present application may be a short-distance transportation scooter, such as a tricycle and a bicycle. In particular, the scooter has a small dimension in a width direction thereof. The width direction of the scooter may be an axial direction of a wheel of the scooter. Meanwhile, the scooter has a small wheel track. This results in a small size and a low weight of the scooter so that the scooter can be very suitable for short distance traveling.

The scooter may include the above-mentioned travel body 100 and the above-mentioned parking module 200. For the embodiments of the scooter, a reference may be made to the embodiments of the eclectic short-distance transportation vehicle 001, which will not be described here redundantly.

In summary, the electric short-distance transportation vehicle 001 or scooter provided in this specification allows the user to apply force to the triggering unit 210, triggering the unit and thereby controlling the switching of the parking module 200 between the first and second states. The parking module 200 is configured in such a way that, on one hand, it allows the user to quickly enter parking state while keeping the vehicle 001 powered on, improving the stability of the vehicle 001 during temporary parking and reducing the risk of the vehicle 001 sliding down a slope. On the other hand, it also allows the user to quickly exit the parking state when resuming riding. The user can control the parking module 200 to switch to the opposite state by triggering the triggering unit 210 at different times, reducing the user's operational actions and making the control process of the vehicle 001 more convenient and efficient..

The foregoing describes the specific embodiments of the present application. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed application, those skilled in the art can understand that the foregoing detailed application may be presented by way of example only, and may not be limited. Although there is no clear description, those skilled in the art can understand that the present application intends to cover various reasonable changes, improvements and modifications of the embodiments. These changes, improvements and modifications are intended to be proposed in this application and are within the spirit and scope of the exemplary embodiments of this application.

In addition, some specific terms in this application have been used to describe the embodiments of this application. For example, "one embodiment", "an embodiment" and/or "some embodiments" mean that a specific feature, structure, or characteristic described in combination with the embodiment may be included in at least one embodiment of the present application. Therefore, it can be emphasized and should be understood that two or more references to "an embodiment" or "one embodiment" or "an alternative embodiment" in various parts of this specification do not necessarily all refer to the same embodiment. In addition, specific feature, structure, or characteristic may be appropriately combined in one or more embodiments of the present application.

It should be understood that in the foregoing description of the embodiments of the present application, to help understand a feature, and for the purpose of simplifying the present application, the present application sometimes combines various features in a single embodiment, a drawing, or description thereof. However, this does not mean that the combination of these features is necessary. It is entirely possible for those skilled in the art to mark some of the devices as a single embodiment for understanding when reading this application. In other words, the embodiments in this application can also be understood as an integration of multiple sub-embodiments. The content of each sub-embodiment is also true when it is less than all the characteristics of a single previously disclosed embodiment.

Each patent, patent application, patent application publication, and other materials referenced in this disclosure, such as articles, books, specifications, publications, documents, literature, etc. (excluding any related historical examination documents), are incorporated by reference for all purposes relevant to this disclosure, including in the description and claims of this disclosure. However, in the event of any inconsistency or conflict between the descriptions, definitions, and/or terms used in these materials and those used in this disclosure, the terms used in this disclosure shall prevail.

Finally, it should be understood that the embodiment of the application disclosed herein is an explanation of the principle of the embodiment of the application. Other modified embodiments are also within the scope of this application. Therefore, the embodiments disclosed in this application are merely examples rather than limitations. Those skilled in the art can adopt alternative configurations according to the embodiments of the present application to implement the application in this application. Therefore, the embodiments of this application are not limited to those exactly described in the application.

## Claims

1. An electric short-distance transportation vehicle, **characterized by** comprising:
a travel body, including a target wheel; and
a parking module, including a triggering unit, wherein the triggering unit is disposed on an outer surface of the travel body and configured to, when triggered, instruct the parking module to switch between a first state and a second state, wherein
in the first state, the parking module prevents the target wheel from rotating to maintain the electric short-distance transportation vehicle in a powered-on and parking state, and
in the second state, the parking module allows the target wheel to rotate.

2. The electric short-distance transportation vehicle according to claim 1, **characterized in that**, the travel body further includes:
a front wheel and a rear wheel, wherein the target wheel is at least one of the front wheel or the rear wheel, and
a driving motor, mechanically connected with the target wheel; and
the parking module further includes a controller electrically connected with the triggering unit and the driving motor, and configured to:
when the triggering unit is triggered for a first time, send a first signal to control the driving motor to restrict a forward rotation and a backward rotation of the target wheel such that the electric short-distance transportation vehicle is maintained in the parking state, and
when the triggering unit is triggered for a second time, send a second signal to release the restricting of the driving motor on the forward rotation and the backward rotation of the target wheel such that the parking state of the electric short-distance transportation vehicle is released.

3. The electric short-distance transportation vehicle according to claim 2, **characterized in that**, an output shaft of the driving motor is in transmission connection with the target wheel;
the driving motor is configured to generate an electromotive force for driving the forward rotation of the target wheel to limit the backward rotation of the target wheel; the driving motor is configured to generate an electromotive force for driving the backward rotation of the target wheel to limit the forward rotation of the target wheel; and
the first signal is configured to control the driving motor to keep the target wheel from rotating by generating an electromotive force within a preset duration such that the electric short-distance transportation vehicle is maintained in the parking state within the preset duration.

4. The electric short-distance transportation vehicle according to claim 3, **characterized in that**, the travel body comprises a speed sensor electrically connected to the controller, and the speed sensor is configured to detect a driving speed of the vehicle;
based on a detection signal of the speed sensor, the controller determines a direction of vehicle sliding, when the controller determines that the vehicle is sliding forward, the controller controls the electromotive force of the driving motor to limit the forward rotation of the target wheel, and when the controller determines that the vehicle is sliding backward, the controller controls the electromotive force of the driving motor to limit the backward rotation of the target wheel.

5. The electric short-distance transportation vehicle according to any one of claims 1 to 4, **characterized in that**,
the travel body further includes:
a front wheel and a rear wheel, wherein the target wheel is at least one of the front wheel or
the rear wheel, and
a brake system; and
the parking module further includes a controller electrically connected with the triggering unit and the brake system, and configured to:
when the triggering unit is triggered for a first time, send a first signal to control the brake system to lock the target wheel with a frictional force for a preset duration to prevent the target wheel from rotating such that the electric short-distance transportation vehicle is maintained in the parking state, and
when the triggering unit is triggered for a second time, send a second signal to release the locking of the target wheel by the brake system such that the parking state of the electric short-distance transportation vehicle is released.

6. The electric short-distance transportation vehicle according to any one of claims 2 to 5, **characterized in that**,
the travel body further includes an electric lock; and
the controller is electrically connected with the triggering unit and the electric lock, and is configured to:
when the triggering unit is triggered for the first time, send the first signal to control the electric lock to lock a rotation of the target wheel such that the short-distance transportation vehicle is maintained in the parking state; and
when the triggering unit is triggered for the second time, send the second signal to control the electric lock to unlock the rotation of the target wheel to release the parking state.

7. The electric short-distance transportation vehicle according to any one of claims 2 to 5, **characterized in that**,
the travel body includes a body, a steering column, and a handle bar, the handle bar is fixedly connected with the steering column, the body is rotatably connected with the steering column, an end of the handle bar includes a handle grip; and
the triggering unit is disposed between the handle grip and the steering column.

8. The electric short-distance transportation vehicle according to claim 7, **characterized in that** the triggering unit is a button unit including a base, a triggering element, and a switch contact;
the switch contact is disposed on the base; the triggering element is rotatably connected with the base; and the triggering element is configured to rotate, upon being pressed, relative to the base, so as to trigger the switch contact.

9. The electric short-distance transportation vehicle according to claim 8, **characterized in that** the travel body includes:
a brake lever blade; and
a lever body, rotatably connected with the brake lever blade, wherein
the lever body is fixedly connected with the handle bar,
the brake lever blade is located on a first side of the lever body away from a rider, and
the triggering unit is located on a second side of the lever body close to the rider, and the base is fixedly connected with the lever body.

10. The electric short-distance transportation vehicle according to claim 9, **characterized in that** the lever body comprises a first lever body part and a second lever body part, the first lever body part is rotatably connected to the brake lever blade, the triggering unit is located on the second lever body part, and the first lever body part and the second lever body part detachably clamp the handle bar.

11. The electric short-distance transportation vehicle according to claim 9, **characterized in that**, an accommodating slot opening outwards is disposed on the second side of the lever body; and the triggering unit is disposed within the accommodating slot and fixedly connected with the lever body.

12. The electric short-distance transportation vehicle according to claim 11, **characterized in that**, the triggering unit is connected with the controller via a brake cable; the handle bar is provided with a wiring groove; and the wiring groove is communicated with the accommodating slot such that the brake cable extends from the accommodating slot into the wiring groove.

13. The electric short-distance transportation vehicle according to claim 7, **characterized in that** the triggering unit is ring-shaped and includes an inner ring and an outer ring; the inner ring is sleeved over the handle bar and located between the handle grip and the steering column; and the outer ring is rotatably sleeved over the inner ring.

14. The electric short-distance transportation vehicle according to claim 13, **characterized in that** the triggering unit further includes a locking structure, and
when a torsional force in a first direction is exerted on the outer ring such that the outer ring rotates around the inner ring to a preset position, the triggering unit is triggered.

15. A scooter, **characterized by** comprising the travel body and the parking module according to any one of claims 1 to 14.
